# EUROPEAN PATENT SPECIFICATION

(11) **EP 1 356 696 B1**
(45) Date of publication and mention of the grant of the patent: **13.08.2008**
(21) Application number: 01978491.7
(22) Date of filing: 18.10.2001
(51) Int. Cl.: H04Q 7/22

(54) **METHOD FOR PERFORMING AN INQUIRY IN A TELECOMMUNICATIONS NETWORK**
VERFAHREN ZUR DURCHFÜHRUNG EINER UMFRAGE IN EINEM TELEKOMMUNIKATIONSNETZ
PROCEDE DE REALISATION D'UN SONDAGE DANS UN RESEAU DE TELECOMMUNICATIONS

(30) Priority: 18.10.2000 FI 20002299; 06.12.2000 US 254643 P; 23.03.2001 FI 20010597
(43) Date of publication of application: 29.10.2003
(73) Proprietor: Nokia Corporation, 02150 Espoo (FI)
(72) Inventor: VILKUNA, Kirsti, FIN-40740 Jyväskylä (FI); JOHANSSON, Sami, FIN-40640 Jyväskylä (FI)
(74) Representative: Pursiainen, Timo Pekka
(86) International application number: PCT/FI2001/000905
(87) International publication number: WO 2002/033991

(56) References cited:
- WO-A1-00/41415
- WO-A1-98/09451

## Description

The present invention relates to a method for performing an inquiry in a telecommunications network, in which method the inquiry is carried out in the steps according to the preamble of claim 1.

At present, inquiries are performed either by mailing a questionnaire and receiving replies or via an interactive interview (e.g. by telephone or face to face). Handling and analyzing the replies manually takes up an unreasonable amount of labor resources and/or time.

The international patent proceeding W098/09451 has presented a Gallup poll method based on text message inquiries. In this method the inquiry is sent in the form of an SMS message essentially simultaneously to the communication stations of two separate recipients via a service center that utilizes wireless data transfer. Then the recipients enter their replies into the inquiry message and send a reply message in the form of an SMS message back to the data system of the sender, in which it is processed in a predetermined way.

The object of the present invention is to achieve an improved method for performing an inquiry using SMS messages. The features characteristic of the method of the invention are presented in claim 1. When an inquiry is performed in a telecommunications network by the method of the invention, considerable advantages will be achieved. In addition to the fact that the questions can be sent and received by a softwarecontrolled technique using an SMS (Short Message Service) communications network, the progress of the inquiry for the part of each respondent can be controlled in accordance with a set criterion. Preferably, the results of the inquiry are produced and updated on a display device in real time, expressly as an HTML page, which is easy to monitor via the information network.

In the following, the method will be described with reference to the attached drawings illustrating the method and giving a functional block diagram of it.
- Fig. 1: is a diagram illustrating the method,
- Fig. 2: presents a functional block diagram of the method,
- Fig. 3: presents the real-time result of an inquiry.

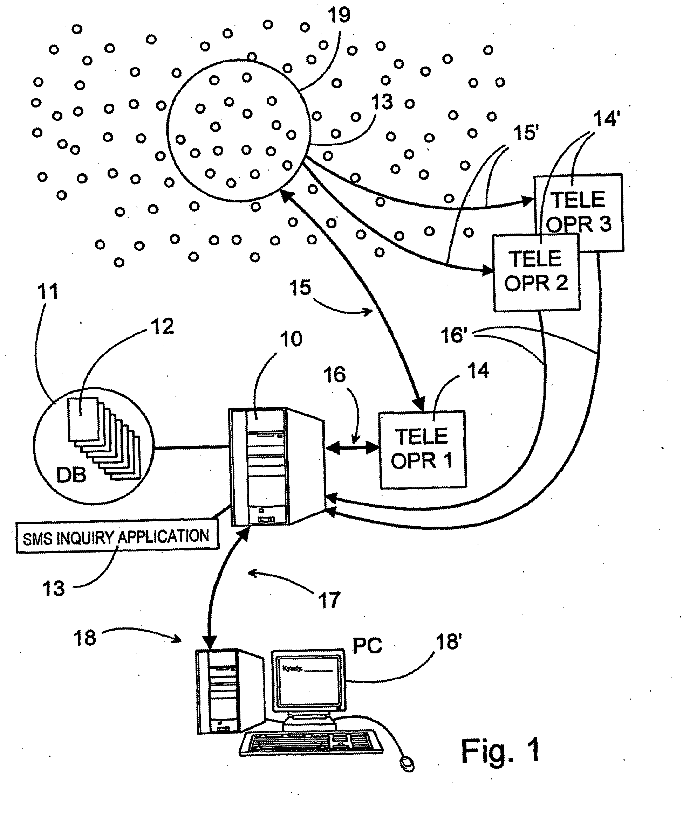

In Fig. 1, a server 10 is used to maintain a database 11 consisting of information relating to persons 12, including SMS communication address data (generally a mobile telephone number). The server is also used to run an SMS inquiry application 13. Via channels 16 and 17, the server 10 communicates both with a telecommunications operator 14 and with a workstation 18 controlling the server via remote operation. Using SMS techniques 15, the telecommunications operator 14 communicates with a person 19 belonging to a initial set 13 formed from the database on the basis of certain conditions..

The service uses preferably several telecommunications operators 14'. Each of these operators, utilizing SMS techniques 15', is in contact with his own subscribers and via channels 16' with the server 10.

The system provides the respondent preferably with a free SMS number. A service has been ordered from each telecommunications operator, in which the text messages sent to the same reply number are sent to the server 10 via the said channels 16 and 16'.

The text messages received by each telecommunications operator are sent (channels 16, 16') to a chosen IP address (IP = Internet Protocol) on the Internet, this IP address being the above-mentioned server 10, on which the received text messages are transferred into the database with a special application. For example the Finnish operator SONERA offers a service like this under the name of "Content Gateway". It includes a software installed on the server, which communicates with the text message center, and on the other hand is connected with the chosen database via AP interface. A corresponding service is ordered from each operator. In this case the "Content Gateway" software stores the text messages on the server as files, which are brought into the database by another application at fixed intervals. The database is utilized by a statistical application, which is now able to present the results of the inquiry e.g. in a real-time bar chart.

Preferably the real-time application is formed on the HTTP server connected with the Internet or the Extranet, which can naturally be the above-mentioned server 10. The graphic bar chart is realized simply as an HTML page, on which the height of the bars is determined by the updated data. An HTML page like this can easily be monitored throughout the whole information network with the help of browsers. The user downloads the page manually at fixed intervals. When desired an automatic updating, the page may be provided with an update command (REFRESH), which updates the page automatically.

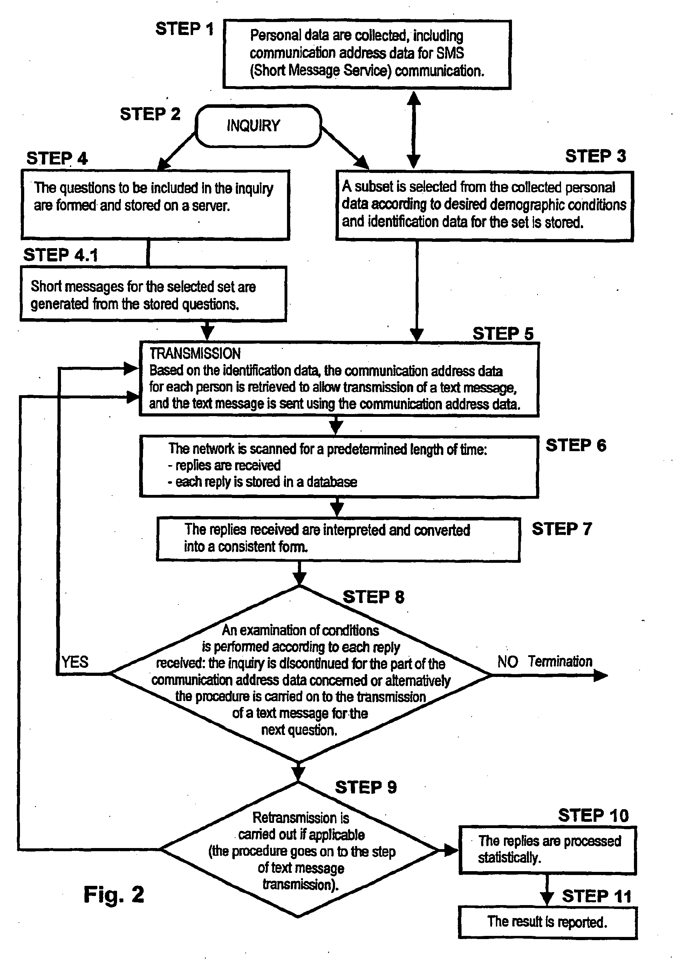

The action of the invention represented by the block diagram in Fig. 2 is as follows. In step 1, a database of information relating to persons, including communication address data 11, is created on the server 10 to allow SMS communication. Step 2 starts the inquiry, and at first steps 3 and 4 are executed concurrently. In step 3, a initial set satisfying desired demographic conditions is selected from the database, and the identification data relating to this set are stored on the server 10. In step 4, the questions to be presented in the inquiry are generated and stored on the server 10. From the questions, text messages for the selected set 13 are formed and stored on the server 10 in step 4.1 and, based on the identification data, the communication address data for each person is retrieved for the transmission of the text message. In step 5, the text messages are transmitted by the telecommunications operator 14 over the SMS communication network 15 to each person.

The person 19 belonging to the initial set 13 receives in his communication station an unambiguous question and alternatives for a reply (e.g. "Yes" or "No") to it, together with a reply address to which the reply is to be sent. The reply address is generally the sender's (server's) telephone number, making it possible to utilize the fast conventional "Reply to Sender" text message function. In step 6, the server 10 receives replies from the initial set 13 for a predetermined length of time and sends them further to the SMS inquiry application 13, which will interpret them and store them in the database 11. In step 7, the SMS inquiry application converts the received replies into an unambiguous form (e.g. YES, Y=>"1"), and in step 8 an examination of conditions is performed in accordance with a set criterion. For example, if the reply so requires, the inquiry is discontinued for the part of the communication address data in question or alternatively the procedure is carried on to step 5, transmission of a text message, for the next question. According to step 9, the system remains waiting for replies from persons (a subset of persons) for a predetermined length of time, whereupon the question can be sent again to persons who did not reply (second criterion).

The progress of the inquiry and the results produced can be monitored in real time during the inquiry via the display device 18' of a remotely operated workstation 18. In steps 10 and 11, a statistical report is generated from the stored replies as a continuous function during the inquiry or after its completion. Real-time monitoring of the results provides the possibility to end the inquiry at a desired point.

Future third-generation telecommunications networks will probably allow the use of some other short message system instead of the SMS.

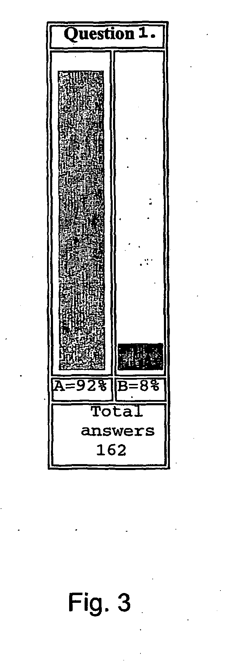

The next example presents the HTML (hypertext markup language) code used for a graphic presentation. This graphic presentation can be applied both in a one-phase and a multi-phased inquiry. The height ("HEIGHT=276" and "HEIGHT=24") of the bars on the HTML page and the total amount of the respondents ("Total answers 162") are parameters, which are changed when updating the page. The size of the page is so minimal that it is very quickly updated by the server 10 handling the inquiry(or the same server). The code of the page includes an update command, which allows the viewer's browser to download the page every five minutes. Fig. 3 presents an example of a printout produced by this code.

```
 <HTML>
 <HEAD>
  <META HTTP-EQUIV="Refresh"
 CONTENT="300;URL=http://www.mobilemirror.fi/tulosdemo/output.html">
  <TITLE>Inquiry results</TITLE>
 </HEAD>
 <BODY BGCOLOR=#ffffff>
 <CENTER>
 <TABLE BORDER=1>
 <TR>
  <TH COLSPAN=2 ALIGN=center>Question 1.</TH>
 </TR>
 <TR ALIGN=center>
  <TD HEIGHT=300 VALIGN=bottom> <IMG SRC=green.jpg WIDTH=40 HEIGHT=276 ALT="A 92%">
  <TD HEIGHT=300 VALIGN=bottom> <IMG SRC=red.jpg WIDTH=40 HEIGHT=24 ALT="B 8%">
 </TR>
 <TR>
  <TD>A=92%</TD>
  <TD>B=8%</TD>
 </TR>
 <TR ALIGN=center>
  <TD COLSPAN=2>
  Total</BR>
  answers</BR>
  162
  </TD>
 </TR>
 </TABLE>
 <CENTER>
 </BODY>
```

## Claims

1. Method for performing an inquiry wirelessly in a telecommunications network, the method comprising:
- creating a database of persons and demographic data relating to each person,
- forming and storing questions,
- transcribing the questions into SMS (Short Message Service) messages according to the specifications of a telecommunications network applicable in SMS communication,
- selecting from the database an initial set satisfying desired demographic conditions,
- sending the formed SMS messages via the telecommunications network to the persons included in the set,
- receiving replies from a subset of the initial set of persons via the SMS message service for a predetermined length of time,
- storing and interpreting each reply,
- generating a report,
**characterized in that**
- after the replies from the subset are received, according to the replies and a chosen criterion the subset of persons is split so that either
- a next question is sent to a person of the subset or
- inquiry is discontinued for this person of the subset, and
- replies to the next question are received, stored and interpreted.

2. Method as defined in claim 1, **characterized in that** the replies received are converted into an unambiguous form.

3. Method as defined in claim 1 or 2, **characterized in that**, according to a set second criterion, the question is retransmitted.

4. Method as defined in one of claims 1 - 3, **characterized in that** the replies received and the actions provoked by them are handled by software in a server adapted for this purpose.

5. Method as defined in claim 4, **characterized in that** the server maintaining the system is operated by remote control from a workstation.

6. Method as defined in claim 4 or 5, **characterized in that** the replies are processed statistically.

7. Method as defined in claim 5 or 6, **characterized in that** the results of the inquiry are produced and updated on a display device in real time.

8. Method as defined in any of the claims 4 - 7, **characterized in that** the SMS messages are sent to a chosen IP (Internet Protocol) address on the Internet, this IP address being on the server, on which the received SMS messages will be transferred to the database with a special application.

9. Method as defined in any of the claims 1 - 8, **characterized in that** the results are transferred to an updatable HTML page, so that the HTML page with its new result values is saved on a HTTP server at fixed intervals.

10. A server connected to at least one telecommunications network applicable in SMS (Short Message Service) communication, the server being arranged to:
- maintain a database of persons and demographic data relating to each person,
- form and store questions for performing an inquiry,
- transcribe the questions into SMS messages,
- select from the database an initial set satisfying desired demographic conditions,
- send the formed SMS messages via the telecommunications network to the persons included in the set,
- receive replies from a subset of the initial set of persons via the SMS message service for a predetermined length of time,
- store and interpret the replies,
- generating a report,
**characterized in that**
- after the replies from the subset are received, according to the replies and a chosen criterion the subset of persons is split so that either
- a next question is sent to a person of the subset or
- inquiry is discontinued for this person of the subset, and
- replies to the next question are received, stored and interpreted.

11. The server as defined in claim 10, **characterized in that** the server is arranged to convert the received replies into an unambiguous form.

12. The server as defined in claim 10 or 11, **characterized in that**, according to a set second criterion, the server is arranged to retransmit the question.

13. The server as defined in any of the claims 10 - 12, **characterized in that** the server is arranged to process the replies statistically.

14. The server as defined in any of the claims 10 - 13, **characterized in that** the server is arranged to transfer the results to an updatable HTML page, so that the HTML page with its new result values is saved on a HTTP server at fixed intervals.

15. A computer program product, stored on a computer readable medium and executable in a data processing device connected to at least one telecommunications network applicable in SMS (Short Message Service) communication, for performing an inquiry wirelessly in a telecommunications network, the computer program product comprising:
- a computer program code section for forming and storing questions for performing an inquiry;
- a computer program code section for transcribing the questions into SMS messages,
- a computer program code section for selecting from a database of persons and demographic data relating to each person an initial set satisfying desired demographic conditions,
- a computer program code section for controlling the data processing device to send the formed SMS messages via the telecommunications network to the persons included in the set,
- a computer program code section for storing and interpreting replies, received by the data processing device, from a subset of the initial set of persons via the SMS message service for a predetermined length of time,
- a computer program code section for generating a report,
**characterized in that** the computer program product further comprises
- a computer program code section for splitting the subset of persons, according to the replies received from the subset and a chosen criterion, so that either
- a next question is sent to a person of the subset or
- inquiry is discontinued for this person of the subset, and
- a computer program code section for receiving, storing and interpreting replies to the next question.

## Patentansprüche

1. Verfahren zur drahtlosen Durchführung einer Befragung in einem Telekommunikationsnetz, wobei das Verfahren umfasst:
- Erzeugen einer Datenbank von Personen und demografischen Daten in Bezug auf jede Person,
- Bilden und Speichern von Fragen,
- Umschreiben der Fragen in SMS (Kurznachrichtendienst)-Nachrichten gemäß den Spezifikationen eines Telekommunikationsnetzes, das in der SMS-Kommunikation anwendbar ist,
- Auswählen aus der Datenbank eines Ausgangssatzes, der gewünschte demografische Bedingungen erfüllt,
- Senden der gebildeten SMS-Nachrichten über das Telekommunikationsnetz an die Personen, die in dem Satz enthalten sind,
- Empfangen von Antworten von einem Teilsatz des Ausgangssatzes von Personen über den SMS-Nachrichtendienst für eine vorgegebene Zeitdauer,
- Speichern und Interpretieren jeder Antwort,
- Erzeugen eines Berichts;
**dadurch gekennzeichnet, dass**
- nach dem Empfang der Antworten vom Teilsatz der Teilsatz von Personen gemäß den Antworten und einem gewählten Kriterium so aufgeteilt wird, dass entweder
- eine nächste Frage an eine Person des Teilsatzes gesendet wird
oder
- die Befragung für diese Person des Teilsatzes abgebrochen wird,
und
- Antworten auf die nächste Frage empfangen, gespeichert und interpretiert werden.

2. Verfahren nach Anspruch 1, **dadurch gekennzeichnet, dass** die empfangenen Antworten in eine unzweideutige Form umgewandelt werden.

3. Verfahren nach Anspruch 1 oder 2, **dadurch gekennzeichnet, dass** gemäß einem festgelegten zweiten Kriterium die Frage wiedergesendet wird.

4. Verfahren nach einem der Ansprüche 1 bis 3, **dadurch gekennzeichnet, dass** die empfangenen Antworten und die **dadurch** hervorgerufenen Aktionen durch Software in einem zu diesem Zweck ausgelegten Server verarbeitet werden.

5. Verfahren nach Anspruch 4, **dadurch gekennzeichnet, dass** der Server, der das System aufrechterhält, durch eine Fernsteuerung von einer Workstation betrieben wird.

6. Verfahren nach Anspruch 4 oder 5, **dadurch gekennzeichnet, dass** die Antworten statistisch verarbeitet werden.

7. Verfahren nach Anspruch 5 oder 6, **dadurch gekennzeichnet, dass** die Ergebnisse der Befragung auf einer Anzeigevorrichtung in Echtzeit erzeugt und aktualisiert werden.

8. Verfahren nach einem der Ansprüche 4 bis 7, **dadurch gekennzeichnet, dass** die SMS-Nachrichten an eine gewählte IP (Internetprotokoll)-Adresse im Internet gesendet werden, wobei diese IP-Adresse auf dem Server ist, auf dem die empfangenen SMS-Nachrichten mit einer besonderen Anwendung an die Datenbank übertragen werden.

9. Verfahren nach einem der Ansprüche 1 bis 8, **dadurch gekennzeichnet, dass** die Ergebnisse an eine aktualisierbare HTML-Seite gesendet werden, so dass die HTML-Seite mit ihren neuen Ergebniswerten auf einem HTTP-Server in festen Intervallen gespeichert wird.

10. Server, der mit wenigstens einem Telekommunikationsnetz verbunden ist, das in der SMS (Kurznachrichtendienst)-Kommunikation anwendbar ist, wobei der Server ausgelegt ist zum:
- Unterhalten einer Datenbank von Personen und demografischen Daten in Bezug auf jede Person,
- Bilden und Speichern von Fragen zur Durchführung einer Befragung,
- Umschreiben der Fragen in SMS-Nachrichten,
- Auswählen aus der Datenbank eines Ausgangssatzes, der gewünschte demografische Bedingungen erfüllt,
- Senden der gebildeten SMS-Nachrichten über das Telekommunikationsnetz an die Personen, die in dem Satz enthalten sind,
- Empfangen von Antworten von einem Teilsatz des Ausgangssatzes von Personen über den SMS-Nachrichtendienst für eine vorgegebene Zeitdauer,
- Speichern und Interpretieren der Antworten,
- Erzeugen eines Berichts;
**dadurch gekennzeichnet, dass**
- nach dem Empfang der Antworten vom Teilsatz der Teilsatz von Personen gemäß den Antworten und einem gewählten Kriterium so aufgeteilt wird, dass entweder
- eine nächste Frage an eine Person des Teilsatzes gesendet wird
oder
- die Befragung für diese Person des Teilsatzes abgebrochen wird,
und
- Antworten auf die nächste Frage empfangen, gespeichert und interpretiert werden.

11. Server nach Anspruch 10, **dadurch gekennzeichnet, dass** der Server so ausgelegt ist, dass er die empfangenen Antworten in eine unzweideutige Form umwandelt.

12. Server nach Anspruch 10 oder 11, **dadurch gekennzeichnet, dass** gemäß einem festgelegten zweiten Kriterium der Server so ausgelegt ist, dass er die Frage wiedersendet.

13. Server nach einem der Ansprüche 10 bis 12, **dadurch gekennzeichnet, dass** der Server so ausgelegt ist, dass er die Fragen statistisch verarbeitet.

14. Server nach einem der Ansprüche 10 bis 13, **dadurch gekennzeichnet, dass** der Server so ausgelegt ist, dass er die Ergebnisse an eine aktualisierbare HTML-Seite überträgt, so dass die HTML-Seite mit ihren neuen Ergebniswerten auf einem HTTP-Server in festen Intervallen gespeichert wird.

15. Computerprogrammprodukt, das auf einem computerlesbaren Medium gespeichert und in einer Datenverarbeitungsvorrichtung ausführbar ist, die mit wenigstens einem Telekommunikationsnetz verbunden ist, das in der SMS (Kurznachrichtendienst)-Kommunikation anwendbar ist, zur drahtlosen Durchführung einer Befragung in einem Telekommunikationsnetz, wobei das Computerprogrammprodukt umfasst:
- einen Computerprogrammcodeabschnitt zum Bilden und Speichern von Fragen zur Durchführung einer Befragung,
- einen Computerprogrammcodeabschnitt zum Umschreiben der Fragen in SMS-Nachrichten,
- einen Computerprogrammcodeabschnitt zum Auswählen aus einer Datenbank von Personen und demografischen Daten in Bezug auf jede Person eines Ausgangssatzes, der gewünschte demografische Bedingungen erfüllt,
- einen Computerprogrammcodeabschnitt zum derartigen Steuern der Datenverarbeitungsvorrichtung, dass sie die gebildeten SMS-Nachrichten über das Telekommunikationsnetz an die Personen sendet, die in dem Satz enthalten sind,
- einen Computerprogrammcodeabschnitt zum Speichern und Interpretieren von Antworten, die durch die Datenverarbeitungsvorrichtung von einem Teilsatz des Ausgangssatzes von Personen über den SMS-Nachrichtendienst für eine vorgegebene Zeitdauer empfangen werden,
- einen Computerprogrammcodeabschnitt zum Erzeugen eines Berichts;
**dadurch gekennzeichnet, dass** das Computerprogrammprodukt ferner umfasst:
- einen Computerprogrammcodeabschnitt zum derartigen Aufteilen des Teilsatzes von Personen gemäß den vom Teilsatz empfangenen Antworten und einem gewählten Kriterium, dass entweder
- eine nächste Frage an eine Person des Teilsatzes gesendet wird
oder
- die Befragung für diese Person des Teilsatzes abgebrochen wird,
und
- einen Computerprogrammcodeabschnitt zum Empfangen, Speichern und Interpretieren von Antworten auf die nächste Frage.

## Revendications

1. Procédé pour effectuer une demande de renseignements de manière non filaire dans un réseau de télécommunication, le procédé comprenant les étapes suivantes :
- créer une base de données de personnes et de données démographiques se rapportant à chaque personne,
- former et stocker des questions,
- transcrire les questions en messages SMS (service de messages courts) selon les spécifications d'un réseau de télécommunication applicable dans une communication SMS,
- sélectionner, à partir de la base de données, un ensemble initial satisfaisant à des conditions démographiques souhaitées,
- envoyer les messages SMS formés via le réseau de télécommunication aux personnes incluses dans l'ensemble,
- recevoir des réponses d'un sous-ensemble de l'ensemble initial de personnes via le service de messages SMS pendant une période de temps prédéterminée,
- stocker et interpréter chaque réponse,
- générer un rapport,
**caractérisé en ce que**
- après que les réponses provenant du sous-ensemble soient reçues, selon les réponses et un critère choisi, le sous-ensemble de personnes est divisé de sorte que
- soit une question suivante est envoyée à une personne du sous-ensemble,
- soit la demande de renseignements est abandonnée pour cette personne du sous-ensemble,
et
- des réponses à la question suivante sont reçues, stockées et interprétées.

2. Procédé selon la revendication 1, **caractérisé en ce que** les réponses reçues sont converties sous une forme non ambiguë.

3. Procédé selon la revendication 1 ou 2, **caractérisé en ce que**, selon un second critère établi, la question est retransmise.

4. Procédé selon l'une quelconque des revendications 1 à 3, **caractérisé en ce que** les réponses reçues et les actions provoquées par celles-ci sont traitées par un logiciel dans un serveur adapté à cet effet.

5. Procédé selon la revendication 4, **caractérisé en ce que** le serveur maintenant le système est mis en fonctionnement par une commande à distance à partir d'une station de travail.

6. Procédé selon la revendication 4 ou 5, **caractérisé en ce que** les réponses sont traitées statistiquement.

7. Procédé selon la revendication 5 ou 6, **caractérisé en ce que** les résultats de la demande de renseignements sont produits et mis à jour sur un dispositif d'affichage en temps réel.

8. Procédé selon l'une quelconque des revendications 4 à 7, **caractérisé en ce que** les messages SMS sont envoyés à une adresse IP (Protocole Internet) choisie sur l'Internet, cette adresse IP étant sur le serveur, sur lequel les messages SMS reçus seront transférés à la base de données avec une application spéciale.

9. Procédé selon l'une quelconque des revendications 1 à 8, **caractérisé en ce que** les résultats sont transférés à une page HTML qui peut être mise à jour, de sorte que la page HTML avec ses nouvelles valeurs de résultat est sauvegardée sur un serveur HTTP à intervalles fixes.

10. Serveur raccordé à au moins un réseau de télécommunication applicable dans une communication SMS (service de messages courts), le serveur étant agencé pour :
- maintenir une base de données de personnes et de données démographiques se rapportant à chaque personne,
- former et stocker des questions pour effectuer une demande de renseignements,
- transcrire les questions en messages SMS,
- sélectionner, à partir de la base de données, un ensemble initial satisfaisant à des conditions démographiques souhaitées,
- envoyer les messages SMS formés via le réseau de télécommunication aux personnes incluses dans l'ensemble,
- recevoir des réponses d'un sous-ensemble de l'ensemble initial de personnes via le service de messages SMS pendant une période de temps prédéterminée,
- stocker et interpréter les réponses,
- générer un rapport,
**caractérisé en ce que**
- après que les réponses provenant du sous-ensemble soient reçues, selon les réponses et un critère choisi, le sous-ensemble de personnes est divisé de sorte que
- soit une question suivante est envoyée à une personne du sous-ensemble,
- soit la demande de renseignements est abandonnée pour cette personne du sous-ensemble,
et
- des réponses à la question suivante sont reçues, stockées et interprétées.

11. Serveur selon la revendication 10, **caractérisé en ce que** le serveur est agencé pour convertir les réponses reçues sous une forme non ambiguë.

12. Serveur selon la revendication 10 ou 11, **caractérisé en ce que**, selon un second critère établi, le serveur est agencé pour retransmettre la question.

13. Serveur selon l'une quelconque des revendications 10 à 12, **caractérisé en ce que** le serveur est agencé pour traiter les réponses statistiquement.

14. Serveur selon l'une quelconque des revendications 10 à 13, **caractérisé en ce que** le serveur est agencé pour transférer les résultats à une page HTML qui peut être mise à jour, de sorte que la page HTML avec ses nouvelles valeurs de résultat est sauvegardée sur un serveur HTTP à intervalles fixes.

15. Produit de programme informatique, stocké sur un support lisible par ordinateur et exécutable dans un dispositif de traitement de données raccordé à au moins un réseau de télécommunication applicable dans une communication SMS (service de messages courts), pour effectuer une demande de renseignement de manière non filaire dans un réseau de télécommunication, le produit de programme informatique comprenant :
- une section de code de programme informatique pour former et stocker des questions pour effectuer une demande de renseignements,
- une section de code de programme informatique pour transcrire les questions en messages SMS,
- une section de code de programme informatique pour sélectionner, à partir d'une base de données de personnes et de données démographiques se rapportant à chaque personne, un ensemble initial satisfaisant à des conditions démographiques souhaitées,
- une section de code de programme informatique pour commander le dispositif de traitement de données pour envoyer les messages SMS formés via le réseau de télécommunication aux personnes incluses dans l'ensemble,
- une section de code de programme informatique pour stocker et interpréter les réponses reçues par le dispositif de traitement de données, provenant d'un sous-ensemble de l'ensemble initial de personnes via le service de messages SMS pendant une période de temps prédéterminée,
- une section de code de programme informatique pour générer un rapport,
**caractérisé en ce que** le produit de programme informatique comprend en outre
- une section de code de programme informatique pour diviser le sous-ensemble de personnes, selon les réponses reçues du sous-ensemble et un critère choisi, de sorte que
- soit une question suivante est envoyée à une personne du sous-ensemble,
- soit la demande de renseignements est abandonnée pour cette personne du sous-ensemble,
et
- une section de code de programme informatique pour recevoir, stocker et interpréter les réponses à la question suivante.
